# FASCICULE DE BREVET EUROPEEN

(11) **EP 3 793 875 B1**
(45) Date de publication et mention de la délivrance du brevet: **24.01.2024**
(21) Numéro de dépôt: 19720902.6
(22) Date de dépôt: 06.05.2019
(51) Int. Cl.: B60W 30/17

(54) **RÉGULATEUR DE CROISIÈRE ADAPTATIF POUR VÉHICULE AUTOMOBILE**
ADAPTIVES GESCHWINDIGKEITSREGELSYSTEM FÜR EIN KRAFTFAHRZEUG
ADAPTIVE CRUISE CONTROL FOR MOTOR VEHICLE

(30) Priorité: 18.05.2018 FR 1854166
(43) Date de publication de la demande: 24.03.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: SIMONIN, Antoine, 92160 Antony (FR); DEBEAUVAIS, Rodolphe, 78000 VERSAILLES (FR)
(74) Mandataire: Renault Group
(86) Numéro de dépôt international: PCT/EP2019/061508
(87) Numéro de publication internationale: WO 2019/219425

(56) Documents cités:
- EP-A1- 1 195 283
- DE-A1-102005 022 676
- DE-A1-102014 201 544
- FR-A1- 2 770 016
- FR-A1- 2 977 851

## Description

La présente invention concerne le domaine de la régulation de croisière adaptative pour véhicule automobile, et plus particulièrement de la régulation de vitesse adaptative ou de la régulation de distance adaptative.

Les dispositifs d'aide à la conduite pour véhicule automobile comprennent des régulateurs de croisière adaptatifs également connus sous la dénomination anglo-saxonne « Adaptive Cruise Control Stop And Go systems » ou sous l'acronyme correspondant « ACCS&G ». Le document DE102005022676 illustre un tel régulateur de croisière adaptatif. Un régulateur de croisière adaptatif incorporé dans un véhicule suiveur permet de réguler la croisière du véhicule suiveur en tenant compte d'un véhicule de tête situé en avant du véhicule suiveur. Par l'expression « réguler la croisière », on entend réguler la vitesse du véhicule suiveur ou la distance entre le véhicule suiveur et le véhicule de tête. Lorsque le véhicule de tête s'arrête, le régulateur de croisière adaptatif détecte cet arrêt et commande l'arrêt du véhicule suiveur. Lorsque le véhicule de tête redémarre, le régulateur de croisière adaptatif arrête de commander l'arrêt du véhicule suiveur.

De manière classique, un régulateur de contrôle adaptatif est capable de mémoriser une consigne de régulation avant l'instant d'arrêt du véhicule suiveur. Lorsque le véhicule de tête redémarre, la régulation reprend avec la consigne mémorisée. Par exemple, le régulateur de croisière adaptatif garde en mémoire une consigne d'activation d'une régulation de vitesse du véhicule suiveur à une vitesse de consigne. Lorsque le véhicule de tête redémarre, la régulation de vitesse est automatiquement activée à la vitesse de consigne.

Une telle conception n'apporte toutefois pas pleine satisfaction. En effet, lorsque le véhicule de tête s'arrête à un feu de signalisation, à un signal d'arrêt ou à un carrefour à sens giratoire, la reprise de la régulation avec la consigne mémorisée peut générer des situations dangereuses, comme l'absence du marquage de l'arrêt au feu de signalisation, au signal d'arrêt, ou encore le manquement d'une règle de priorité.

Pour pallier ces inconvénients, il a été proposé de réinitialiser la consigne mémorisée si l'arrêt du véhicule de tête dépasse une limite de l'ordre de quelques secondes.

Bien qu'une telle solution permette de limiter le danger occasionné par la mémorisation de la consigne, elle contraint le conducteur à réactiver la régulation dans des situations ne présentant pas de danger particulier, par exemple lors d'une circulation en accordéon sur autoroute.

Au vu de ce qui précède, l'invention a pour but de permettre une régulation de croisière adaptative palliant les inconvénients précités.

Plus particulièrement, l'invention a pour but de limiter les dangers liés à la mémorisation de la consigne d'une régulation de croisière adaptative tout en évitant d'obliger le conducteur à réactiver la régulation dans des situations pas ou peu dangereuses.

A cet effet, il est proposé un régulateur de croisière adaptatif pour véhicule automobile comprenant un module de détection d'un véhicule de tête, un module d'élaboration apte à élaborer une consigne, un module de mémorisation configuré pour mémoriser une valeur correspondant à la consigne, un chronomètre configuré pour être initialisé et actionné à un instant d'arrêt du véhicule et un module de réinitialisation du module de mémorisation.

Selon l'invention, ce régulateur comprend un module d'établissement apte à déterminer une limite en fonction d'un environnement du véhicule, le module de réinitialisation étant configuré pour réinitialiser la valeur mémorisée par le module de mémorisation si le chronomètre délivre une durée supérieure à la limite.

Le module d'établissement permet d'établir la valeur de la limite en fonction de l'environnement dans lequel circule le véhicule. Ainsi, la rapidité avec laquelle la consigne mémorisée est réinitialisée est liée avec une estimation d'un niveau de danger encouru par le véhicule.

Selon un mode de réalisation, le module d'établissement comprend un module de détermination apte à déterminer un environnement du véhicule et une cartographie contenant des valeurs de limites en fonction d'un environnement.

Avantageusement, le module d'élaboration est apte à élaborer au moins une consigne choisie parmi une consigne d'activation d'une régulation de vitesse, une consigne de vitesse de régulation, une consigne d'activation d'une régulation de distance par rapport à un véhicule de tête et une consigne de distance de régulation.

Avantageusement, le module de détermination est configuré pour déterminer un environnement choisi parmi un environnement urbain, un environnement péri-urbain, un environnement rural, un environnement de voie rapide et un environnement autoroutier.

De préférence, le module de détermination comprend au moins un moyen choisi parmi un capteur à ultrasons, un radar, un lidar, une caméra, une unité de mesure inertielle, un odomètre, un dispositif de positionnement mondial par satellite.

De tels moyens sont des dispositifs généralement déjà incorporés dans les véhicules automobiles. On limite ainsi le coût de réalisation du régulateur de croisière adaptatif.

Dans un mode de réalisation, le module de détermination comprend au moins une unité d'identification choisie parmi une unité d'identification d'un autre véhicule, une unité d'identification d'un piéton, une unité d'identification d'une infrastructure routière, une unité d'identification d'une géométrie de route et une unité d'identification de conditions météorologiques.

Avantageusement, le module de détermination est apte à identifier au moins une marque d'autoroute ou de voie rapide choisie parmi un panneau de début de section d'autoroute, un cartouche de route de réseau principal et un cartouche de route de réseau secondaire, et configuré pour déterminer que l'environnement est routier si une marque d'autoroute ou de voie rapide est identifiée.

Dans un mode de réalisation, le module de détermination est apte à identifier au moins une marque urbaine choisie parmi un panneau d'entrée d'agglomération, un panneau d'annonce de débouché de cyclistes et un panneau d'annonce de passage pour piéton, et configuré pour déterminer que l'environnement est urbain si une marque urbaine est identifiée.

Dans un autre mode de réalisation, le module de détermination est apte à identifier au moins une marque de danger choisie parmi un panneau d'indication d'un carrefour à sens giratoire, un panneau d'arrêt et un panneau d'annonce d'un feu de signalisation, et configuré pour déterminer que l'environnement est dangereux si une marque de danger est identifiée.

Avantageusement, le module d'établissement choisit une limite comprise entre 25 secondes et 35 secondes dans le cas d'un environnement routier, une limite comprise entre 2 secondes et 4 secondes dans le cas d'un environnement urbain et une limite inférieure à 0,1 seconde dans le cas d'un environnement dangereux.

Des limites choisies dans ces plages de valeurs sont particulièrement adaptées pour limiter le danger occasionné par la mémorisation de la consigne tout en évitant de mettre en oeuvre une réinitialisation dans des situations pas ou peu dangereuses.

Selon un autre aspect de l'invention, il est proposé un procédé de régulation de croisière adaptative d'un véhicule automobile, dans lequel on détecte un véhicule de tête, on élabore une consigne, on mémorise, avant un instant d'arrêt du véhicule, une valeur correspondant à la consigne, on initialise et on actionne un chronomètre à un instant d'arrêt du véhicule, on détermine un environnement du véhicule, on détermine une limite en fonction de l'environnement du véhicule et on réinitialise la valeur mémorisée si le chronomètre délivre une durée supérieure à la limite.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue schématique d'un véhicule automobile incorporant un régulateur selon un aspect de l'invention,
- la figure 2 est une représentation schématique du régulateur du véhicule de la figure 1,
- la figure 3 illustre des exemples de marques d'autoroute et de marques de voie rapide,
- la figure 4 illustre des exemples de marques urbaines,
- la figure 5 illustre des exemples de marques de danger, et
- la figure 6 illustre un procédé de régulation de croisière adaptative selon un autre aspect de l'invention.

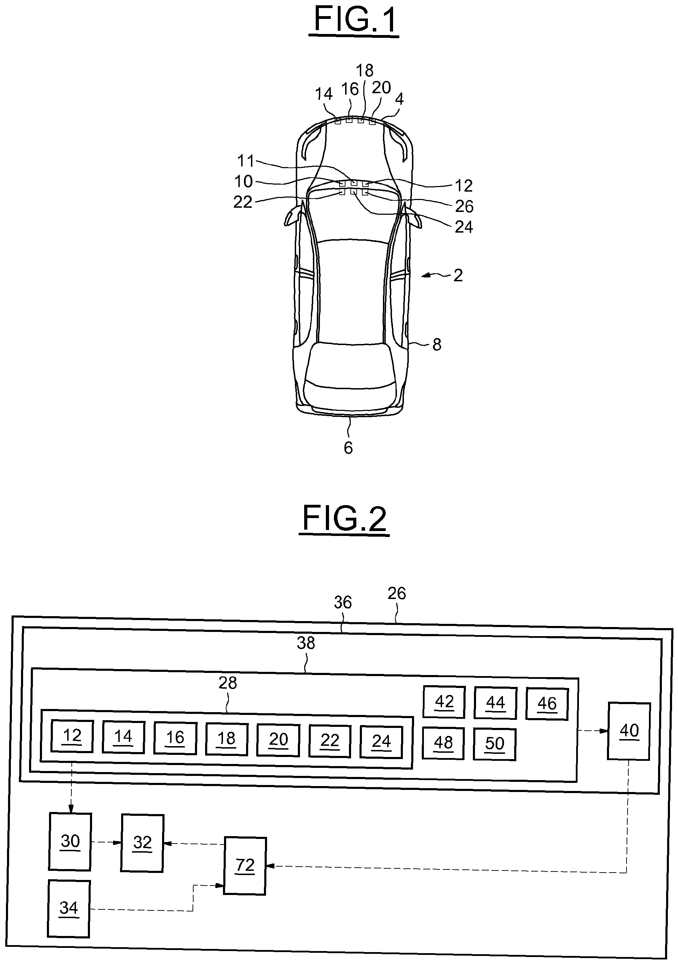

En référence à la figure 1, on a schématiquement représenté un véhicule automobile 2. Le véhicule 2 comporte une extrémité avant 4 et une extrémité arrière 6.

Dans la présente demande, les mots « avant » et « arrière » seront compris comme se référant aux extrémités avant 4 et arrière 6 du véhicule 2. De même, les termes « longitudinal », « transversal », « gauche » et « droite » seront compris en considérant la direction longitudinale joint globalement les extrémités 4 et 6 du véhicule 2.

Le véhicule 2 comporte une carrosserie 8, un ordinateur de bord 10, une interface conducteur 11 et un système de positionnement mondial par satellite 12, également connu sous la dénomination anglo-saxonne « Global Navigation Satellite System » et sous l'acronyme correspondant « GNSS », comme par exemple le « Global Positioning System » connu sous l'acronyme correspondant « GPS ».

Le véhicule 2 comporte en outre un radar 14, un lidar 16, un capteur à ultrasons 18 et une caméra 20. Les composants 14, 16, 18 et 20 sont disposés à proximité de l'extrémité avant 4 du véhicule 2, par exemple dans une calandre, une grille d'auvent, une zone à proximité d'un pare-brise ou un pare-chocs du véhicule 2. De la sorte, les composants 14, 16, 18 et 20 acquièrent des images représentatives de l'environnement du véhicule 2, notamment de l'environnement situé en avant du véhicule 2.

Le véhicule 2 comporte un odomètre 22 et une unité de mesure inertielle 24. L'odomètre 22 et l'unité de mesure inertielle 24 sont en liaison d'informations avec l'ordinateur de bord 10 et sont aptes à fournir des informations telles qu'une position relative ou une accélération du véhicule 2. L'odomètre 22 et l'ordinateur de bord 10 sont capables de déterminer la vitesse V_{VEH} du véhicule 2.

Le véhicule 2 comporte un régulateur de croisière adaptatif 26. Dans l'exemple illustré, le régulateur 26 met en oeuvre une régulation de la vitesse V_{VEH} et une régulation d'une distance Δ par rapport à un véhicule de tête (non représenté). Toutefois, on peut bien entendu envisager, sans sortir du cadre de l'invention, un régulateur de croisière adaptatif ne mettant en oeuvre que l'une de ces deux fonctions. Le régulateur 26 est représenté schématiquement sur la figure 2.

En référence à la figure 2, le régulateur 26 comporte le système de positionnement 12, le radar 14, le lidar 16, le capteur à ultrasons 18, la caméra 20, l'odomètre 22 et l'unité de mesure inertielle 24. Les composants 12, 14, 16, 18, 20, 22 et 24 constituent ensemble un module de détection 28 destiné à détecter la présence et la position d'un véhicule de tête (non représenté) relativement par rapport au véhicule 2.

Le régulateur 26 comporte un module d'élaboration 30. Le module 30 est en liaison d'informations avec le module 28 et l'ordinateur de bord 10. Le module 30 a pour fonction d'élaborer une consigne en fonction de paramètres de roulage du véhicule 2, d'une intention du conducteur du véhicule 2 et de la présence et de la position d'un véhicule de tête.

Plus particulièrement, le module 30 élabore une consigne CONS_1 d'activation d'une régulation de la vitesse V_{VEH}. La consigne CONS_1 prend la valeur « OUI » si une régulation de la vitesse V_{VEH} doit être mise en oeuvre et la valeur « NON » sinon.

Le module 30 génère une consigne CONS_2 de vitesse de régulation. La consigne CONS_2 peut prendre n'importe quelle valeur de vitesse pouvant être atteinte par le véhicule 2. Plus particulièrement, le module 30 recueille la consigne CONS_2 depuis l'ordinateur de bord 10 et l'interface de saisie 11.

Le module 30 élabore une consigne CONS_3 d'activation d'une régulation de la distance Δ. La consigne CONS_3 prend la valeur « OUI » si une régulation de la distance Δ doit être mise en oeuvre et la valeur « NON » sinon. La consigne CONS_3 est forcée sur la valeur « NON » si le module de détection 28 ne détecte pas la présence d'un véhicule de tête.

Le module d'élaboration 30 génère une consigne CONS_4 de distance de régulation entre le véhicule 2 et un véhicule de tête. La consigne CONS_4 peut prendre n'importe quelle valeur de distance inférieure à la portée maximale des capteurs optiques 14, 16, 18 et 20. Dans l'exemple illustré, la valeur de la consigne CONS_4 se calcule comme une fonction de la vitesse V_{VEH}.

Les consignes CONS_1, CONS_2, CONS_3 et CONS_4 sont adressées à un dispositif de contrôle de la motricité (non représenté) du véhicule 2. Le dispositif de contrôle de la motricité pilote le groupe motopropulseur (non représenté) du véhicule 2 de telle sorte que le véhicule 2 se déplace en conformité avec les consignes CONS_1, CONS_2, CONS_3 et CONS_4. En d'autres termes, le dispositif de contrôle de la motricité pilote le groupe motopropulseur de telle sorte que :
- si CONS_1 = « OUI », la vitesse V_{VEH} converge vers CONS_2, et
- si CONS_3 = « OUI », la distance Δ converge vers CONS_4.

Le module 28 et le module 30 sont dotés des moyens matériels et logiciels pour détecter un ralentissement important ou un arrêt complet du véhicule de tête. Lorsqu'un ralentissement important ou un arrêt complet du véhicule de tête est détecté, le module 30 émet un signal de mémorisation MEMO. Ensuite, le module 30 adapte les consignes CONS_1, CONS_2, CONS_3 et CONS_4 pour arrêter progressivement le véhicule 2.

Le régulateur 26 comporte un module de mémorisation 32. Le module 32 est en liaison d'informations avec le module 30. Plus particulièrement, à chaque front montant du signal MEMO émis par le module 30, le module 32 stocke les valeurs des consignes CONS_1, CONS_2, CONS_3 et CONS_4 émises par le module 30.

Le régulateur 26 comprend un chronomètre 34 en liaison d'informations avec l'ordinateur de bord 10. Plus particulièrement, le chronomètre 34 est configuré pour s'initialiser à zéro et pour se déclencher dès que la vitesse V_{VEH} devient nulle. Lorsqu'il est déclenché, le chronomètre 34 affiche la durée t écoulée depuis l'instant de déclenchement.

Le régulateur 26 comporte un module d'établissement 36. Le module d'établissement 36 comporte un module de détermination 38 et une cartographie 40. Dans l'exemple illustré, le module 38 comporte notamment le module de détection 28.

Le module de détermination 38 comporte une unité d'identification d'un autre véhicule 42, une unité d'identification d'un piéton 44, une unité d'identification d'une géométrie de route 46, une unité d'identification d'une infrastructure routière 48 et une unité d'identification de conditions météorologiques 50. Les unités 42, 44, 46, 48 et 50 sont en liaison d'informations avec le module 28. Plus particulièrement, les unités 42, 44, 46, 48 et 50 sont dotées des moyens matériels et logiciels de traitement des images captées par les composants 14, 16, 18 et 20 du module 28 et des informations recueillies par les composants 22 et 24 du module 28. Les unités 42, 44, 46, 48 et 50 identifient à partir de ces images et de ces informations des données représentatives d'un niveau de danger encouru par le véhicule 2.

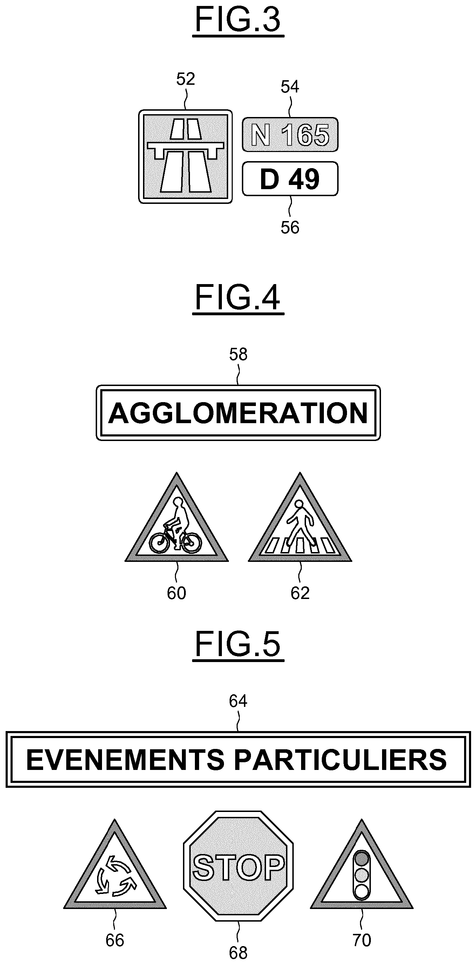

Dans l'exemple illustré, l'unité 48 est dotée des moyens matériels et logiciels pour identifier des panneaux de signalisation caractéristiques d'un environnement du véhicule 2. On a représenté sur les figures 3 à 5 des exemples de tels panneaux de signalisation.

L'unité 48 est configurée pour identifier le panneau de début de section d'autoroute 52, le cartouche de route nationale 54 et le cartouche de route départementale 56. Si l'unité 48 identifie le panneau 52, 54 ou 56, le module 38 émet un signal ENVIR_ROUTIER. Ainsi, le module 38 est capable de détecter que le véhicule 2 circule dans un environnement routier, c'est-à-dire sur une autoroute, une voie rapide, une route principale en milieu rural ou une route principale en milieu périurbain, telle qu'un périphérique ou une rocade.

L'unité 48 est par ailleurs configurée pour identifier le panneau d'entrée d'agglomération 58, le panneau d'annonce de débouché de cycliste 60 et le panneau d'annonce de passage pour piéton 62. Si l'unité 48 identifie le panneau 58, 60 ou 62, le module 38 émet un signal ENVIR_URBAIN. Ainsi, le module 38 est capable de détecter que le véhicule 2 circule dans un environnement urbain, c'est-à-dire notamment sur une rue en ville.

L'unité 48 est configurée pour identifier le panneau d'annonce d'un évènement particulier 64, le panneau d'indication d'un carrefour à sens giratoire 66, le panneau d'arrêt 68, également connu sous la dénomination de panneau de « STOP », et le panneau d'annonce d'un feu de signalisation 70. Si l'unité 48 identifie le panneau 64, 66, 68 ou 70, le module 38 émet un signal ENVIR_DANGER. Ainsi, le module 38 est capable de détecter que le véhicule 2 circule dans un environnement dangereux, c'est-à-dire notamment à proximité d'un carrefour en milieu urbain, périurbain ou rural ou d'un passage à niveau.

Dans l'exemple illustré, l'unité 48 est configurée pour reconnaître la forme, la taille, la couleur et les caractères inscrits sur les panneaux 52, 54, 56, 58, 60, 62, 64, 66, 68 et 70. Bien que l'unité 48 soit spécialement configurée pour identifier les panneaux représentés sur les figures 3 à 5 qui correspondent à la réglementation du code de la route français, on peut bien évidemment sans sortir du cadre de l'invention configurer l'unité 48 pour identifier d'autres panneaux, notamment correspondant à la législation d'un autre pays dans lequel le véhicule 2 est destiné à circuler.

Lorsqu'aucun des panneaux précités ne peut être identifié, ou que les panneaux précités sont identifiés avec une marge d'erreur trop importante, le module de détermination 38 est configuré pour tenir compte des données analysées par les unités 42, 44, 46 et 50.

Plus particulièrement, l'unité 42 recueille les images captées par le radar 14, le lidar 16, le capteur à ultrasons 18 et la caméra 20 pour identifier la présence et la position d'autres véhicules dans l'environnement du véhicule 2. L'unité 44 recueille les mêmes images que l'unité 42 pour détecter la présence d'un piéton dans le voisinage du véhicule 2. Si un grand nombre de véhicules et/ou de piétons sont identifiés, le module 38 émet le signal ENVIR_URBAIN.

L'unité 46 recueille les informations fournies par le système de positionnement 12, l'odomètre 22 et l'unité de mesure inertielle 24, ainsi que les images captées par le radar 14, le lidar 16, le capteur à ultrasons 18 et la caméra 20 pour identifier une géométrie de route particulière. Notamment, l'unité 46 peut détecter une chaussée présentant la forme d'un rond-point, une chaussée présentant une pente, une chaussée présentant la forme d'une bretelle d'accès à une voie rapide, une chaussée présentant la forme d'un croisement. Selon la géométrie de route détectée par l'unité 46, le module 38 émet un signal différent ENVIR ROUTIER, ENVIR URBAIN ou ENVIR DANGER.

L'unité 50 recueille les images captées par le radar 14, le lidar 16, le capteur à ultrasons 18 et la caméra 20, ainsi que les informations émises par l'odomètre 22 et l'unité de mesure inertielle 24 pour identifier des conditions météorologiques particulières. Par exemple, si l'unité 50 détecte des conditions de temps pluvieux ou neigeux, le module 38 émet un signal différent ENVIR_DANGER.

La cartographie 40 est en liaison d'informations avec le module 38. Plus particulièrement, la cartographie 40 recueille le signal ENVIR_ROUTIER, ENVIR_URBAIN ou ENVIR_DANGER émis par la module 38. La cartographie 40 délivre des valeurs de limite temporelle LIM en fonction du signal recueilli. Dans l'exemple illustré, la cartographie 40 délivre :
- lorsque l'on saisit en entrée le signal ENVIR_ROUTIER, une limite LIM comprise entre 25 secondes et 35 secondes, de préférence sensiblement 30 secondes,
- lorsque l'on saisit en entrée le signal ENVIR_URBAIN, une limite LIM comprise entre 2 secondes et 4 secondes, de préférence sensiblement 3 secondes, et
- lorsque l'on saisit en entrée le signal ENVIR_DANGER, une limite LIM strictement inférieure à 0,1 seconde, de préférence sensiblement 0 seconde.

Le régulateur 26 comporte un module de réinitialisation 72 en liaison d'informations avec le module 32, le chronomètre 34 et la cartographie 40. Plus précisément, le module 72 est apte à recueillir la limite LIM. Le module 72 est par ailleurs apte à recueillir la durée t affichée par le chronomètre 34. Le module 72 ait apte à émettre un signal REINIT de réinitialisation du module de mémorisation 32. Le module 72 est configuré pour émettre le signal REINIT dès que la durée t dépasse la limite LIM. Lorsque le module 32 reçoit le signal REINIT, les consignes CONS_1, CONS_2, CONS_3 et CONS_4 mémorisées sont réinitialisées. Plus spécifiquement, lorsque le module 32 recueille le signal REINIT, les consignes CONS_1 et CONS_3 prennent la valeur « NON ».

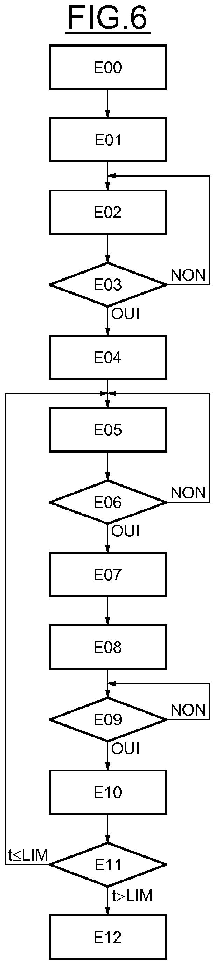

En référence à la figure 6, on a schématiquement représenté le procédé de régulation de croisière adaptative pouvant être mis en oeuvre au moyen du régulateur 26.

Le procédé comprend une étape d'initialisation E00. Lors de l'étape E00, le véhicule 2 est en roulage à la vitesse V_{VEH_E00} et le régulateur 26 est activé par le conducteur.

Le procédé comprend une étape E01 d'établissement des première et deuxième consignes. Plus précisément, au cours de l'étape E01, la consigne CONS_1 prend la valeur « OUI ». La consigne CONS_2 prend une valeur égale à la vitesse V_{VEH_E00}.

Le procédé comprend une étape E02 de mise en oeuvre d'une régulation de la vitesse V_{VEH} tendant à la faire converger vers la vitesse V_{VEH}__{E00}.

Le procédé comprend en suite une étape de test E03 au cours de laquelle on détecte si un véhicule est présent dans la file de circulation du véhicule 2 et en avant du véhicule 2. Temps que la réponse à l'étape E03 est « NON », on continue d'appliquer l'étape E02. Si, à l'issue de l'étape E03, la réponse est « OUI », on applique une étape E04.

Au cours de l'étape E04, on modifie les valeurs des consignes CONS_1, CONS_3 et CONS_4. Plus précisément, la consigne CONS_1 prend la valeur « NON », la consigne CONS_3 prend la valeur « OUI » et la consigne CONS_4 prend une valeur Δ_{E04} proportionnelle à la vitesse V_{VEH}.

Le procédé comprend une étape E05 au cours de laquelle on régule la distance Δ de telle sorte qu'elle converge vers Δ_{E04}. Bien que, dans l'exemple de mise en oeuvre illustré, le passage d'une régulation de vitesse à une régulation de distance fasse suite à la détection de la présence d'un véhicule de tête indépendamment d'une intention du conducteur, il est possible sans sortir du cadre de l'invention de prévoir un autre mode de pilotage du passage d'une régulation de vitesse à une régulation de distance et réciproquement. Par exemple, le passage d'un type de régulation à un autre peut faire suite à une action du conducteur sur l'interface 11.

Le procédé comprend une étape de test E06. Au cours de l'étape E06, on détecte si un ralentissement prononcé ou un arrêt du véhicule de tête a lieu. Si, au cours de l'étape E06, on ne détecte pas un ralentissement prononcé ou un arrêt du véhicule de tête, on répète l'étape E05. Si, à l'issue de l'étape E06, un arrêt ou un ralentissement prononcé du véhicule de tête a été détecté, on applique une étape E07.

Au cours de l'étape E07, le signal MEMO est émis et le module 32 stocke les consignes CONS_1, CONS_2, CONS_3 et CONS_4.

Le procédé comprend une étape E08 d'arrêt du véhicule 2. Au cours de l'étape E08, le dispositif de contrôle de la motricité est piloté de sorte à arrêter le véhicule 2. Lorsque le véhicule 2 est à l'arrêt, le chronomètre 34 est initialisé et actionné. L'étape E08 est alors terminée.

Le procédé comporte une étape de test E09 au cours de laquelle on détermine si le véhicule de tête redémarre. Tant que la réponse est « NON », on répète l'étape E09. Dès que la réponse à l'étape E09 est « OUI », on applique une étape E10.

Au cours de l'étape E10, on recueille la limite LIM délivrée par la cartographie 40 correspondant à l'environnement dans lequel évolue le véhicule 2.

Le procédé comporte une étape de test E11 de comparaison de la limite LIM avec la valeur t affichée par le chronomètre 34. Plus précisément, à l'étape 11 :
- si t < LIM, on reprend la régulation de distance en appliquant l'étape E05, et
- si t ≥ LIM, on applique une étape E12.

Au cours de l'étape E12, le module 72 émet le signal REINIT. Par conséquent, le module 32 est réinitialisé, c'est-à-dire que les consignes CONS_1 et CONS_3 prennent la valeur « NON ». A l'issue de l'étape E12, le procédé est terminé.

Dans l'exemple de mise en oeuvre illustré, le choix d'une réinitialisation dépend directement de la comparaison entre la valeur t et la limite LIM qui peut prendre différentes valeurs. Toutefois, on ne sort pas du cadre de l'invention en envisageant d'autres modes de pilotage. Par exemple, l'étape E12 peut être directement mise en oeuvre dès l'émission du signal ENVIR_DANGER par le module 38. Par ailleurs, les étapes E10 et E11 peuvent être remplacées par une étape de test au cours de laquelle on met en oeuvre deux tests simultanés, à savoir déterminer si un signal ENVIR_URBAIN a été émis et la valeur t dépasse 2 secondes ou si un signal ENVIR_ROUTIER a été émis et la valeur t dépasse 30 secondes. En d'autres termes, une telle étape s'écrit :
[{ENVIR_URBAIN émis ET t ≥ 2 secondes}
OU {ENVIR_ROUTIER émis ET t ≥ 30 secondes}]

Si la réponse à cette étape de test est OUI, on applique l'étape E12. Sinon, on reprend la régulation de croisière avec la consigne mémorisée.

Au vu de ce qui précède, grâce au régulateur 26 et au procédé de régulation selon l'invention, il est possible de mettre en oeuvre une régulation de croisière adaptative en limitant les risques liés à la mémorisation de la consigne dans des situations dangereuses, telles qu'un carrefour avec un feu de signalisation, sans pour autant contraindre le conducteur à réactiver la régulation dans des situations peu ou pas dangereuses, telles qu'une circulation en accordéon sur l'autoroute.

## Revendications

1. Régulateur de croisière adaptatif (26) pour véhicule automobile (2) comprenant un module de détection (28) d'un véhicule de tête, un module d'élaboration (30) apte à élaborer une consigne, un module de mémorisation (32) configuré pour mémoriser une valeur correspondant à la consigne, un chronomètre (34) configuré pour être initialisé et actionné à un instant d'arrêt du véhicule et un module de réinitialisation (72) du module de mémorisation (32), **caractérisé en ce qu'**il comprend un module d'établissement (36) apte à déterminer une limite (LIM) en fonction d'un environnement du véhicule (2), le module de réinitialisation (72) étant configuré pour réinitialiser la valeur mémorisée par le module de mémorisation (32) si le chronomètre (34) délivre une durée (t) supérieure à la limite (LIM).

2. Régulateur (26) selon la revendication 1, dans lequel le module d'élaboration (30) est apte à élaborer au moins une consigne choisie parmi une consigne d'activation (CONS_1) d'une régulation de vitesse, une consigne de vitesse (CONS_2) de régulation, une consigne d'activation (CONS_3) d'une régulation de distance par rapport à un véhicule de tête et une consigne de distance de régulation (CONS_4).

3. Régulateur (26) selon la revendication 2, dans lequel le module d'établissement (30) comprend un module de détermination (38) apte à déterminer un environnement du véhicule (2) et une cartographie (40) contenant des valeurs de limites (LIM) en fonction d'un environnement.

4. Régulateur (26) selon la revendication 2 ou 3, dans lequel le module de détermination (38) comprend au moins un moyen choisi parmi un capteur à ultrasons (18), un radar (14), un lidar (16), une caméra (20), une unité de mesure inertielle (24), un odomètre (22), un dispositif de positionnement mondial par satellite (12).

5. Régulateur (26) selon l'une quelconque des revendications 2 à 4, dans lequel le module de détermination (38) comprend au moins une unité d'identification choisie parmi une unité d'identification d'un autre véhicule (42), une unité d'identification d'un piéton (44), une unité d'identification d'une infrastructure routière (48), une unité d'identification d'une géométrie de route (46) et une unité d'identification de conditions météorologiques (50).

6. Régulateur (26) selon l'une quelconque des revendications 2 à 5, dans lequel le module de détermination (38) est apte à identifier au moins une marque d'autoroute ou de voie rapide choisie parmi un panneau de début de section d'autoroute (52), un cartouche de route de réseau principal (54) et un cartouche de route de réseau secondaire (56), et configuré pour déterminer que l'environnement est routier si une marque d'autoroute ou de voie rapide est identifiée.

7. Régulateur (26) selon l'une quelconque des revendications 2 à 6, dans lequel le module de détermination (38) est apte à identifier au moins une marque urbaine choisie parmi un panneau d'entrée d'agglomération (58), un panneau d'annonce de débouché de cyclistes (60) et un panneau d'annonce de passage pour piéton (62), et configuré pour déterminer que l'environnement est urbain si une marque urbaine est identifiée.

8. Régulateur (26) selon l'une quelconque des revendications 2 à 7, dans lequel le module de détermination (38) est apte à identifier au moins une marque de danger choisie parmi un panneau d'indication d'un carrefour à sens giratoire (66), un panneau d'arrêt (68) et un panneau d'annonce d'un feu de signalisation (70), et configuré pour déterminer que l'environnement est dangereux si une marque de danger est identifiée.

9. Régulateur (26) selon l'une quelconque des revendications 6 à 8, dans lequel le module d'établissement (36) choisit une limite (LIM) comprise entre 25 secondes et 35 secondes dans le cas d'un environnement routier, une limite (LIM) comprise entre 2 secondes et 4 secondes dans le cas d'un environnement urbain et une limite (LIM) inférieure à 0,1 seconde dans le cas d'un environnement dangereux.

10. Procédé de régulation de croisière adaptative d'un véhicule automobile, dans lequel on détecte (E03, E06, E09) un véhicule de tête, on élabore une consigne (E01, E04), on mémorise (E07), avant un instant d'arrêt du véhicule, une valeur correspondant à la consigne, on initialise et on actionne un chronomètre (34) à un instant d'arrêt du véhicule, on détermine (E10) un environnement du véhicule, on détermine une limite (LIM) en fonction de l'environnement du véhicule et on réinitialise (E12) la valeur mémorisée si le chronomètre (34) délivre une durée (t) supérieure à la limite (LIM).

## Patentansprüche

1. Adaptiver Geschwindigkeitsregler (26) für ein Kraftfahrzeug (2), umfassend ein Detektionsmodul (28) zur Detektion eines vorausfahrenden Fahrzeugs, ein Erarbeitungsmodul (30), das geeignet ist, einen Sollwert zu erarbeiten, ein Speichermodul (32), das dazu ausgestaltet ist, einen dem Sollwert entsprechenden Wert zu speichern, einen Zeitmesser (34), der dazu ausgestaltet ist, zu einem Stoppzeitpunkt des Fahrzeugs initialisiert und betätigt zu werden, und ein Rücksetzmodul (72) zum Zurücksetzen des Speichermoduls (32), **dadurch gekennzeichnet, dass** er ein Ermittlungsmodul (36) umfasst, das geeignet ist, einen Grenzwert (LIM) in Abhängigkeit von einem Umfeld des Fahrzeugs (2) zu bestimmen, wobei das Rücksetzmodul (72) dazu ausgestaltet ist, den von dem Speichermodul (32) gespeicherten Wert zurückzusetzen, wenn der Zeitmesser (34) eine Dauer (t) ausgibt, die größer als der Grenzwert (LIM) ist.

2. Regler (26) nach Anspruch 1, bei dem das Erarbeitungsmodul (30) geeignet ist, mindestens einen Sollwert zu erarbeiten, der unter einem Aktivierungssollwert (CONS_1) einer Geschwindigkeitsregelung, einem Regelungsgeschwindigkeitssollwert (CONS_2) einem Aktivierungssollwert (CONS_3) einer Abstandregelung in Bezug auf ein vorausfahrendes Fahrzeug und einem Regelungsabstandssollwert (CONS_4) gewählt ist.

3. Regler (26) nach Anspruch 2, bei dem das Ermittlungsmodul (30) ein Bestimmungsmodul (38) umfasst, das geeignet ist, ein Umfeld des Fahrzeugs (2) und eine Karte (40) mit Werten von Grenzwerten (LIM) in Abhängigkeit von einem Umfeld zu bestimmen.

4. Regler (26) nach Anspruch 2 oder 3, bei dem das Bestimmungsmodul (38) mindestens ein Mittel umfasst, das unter einem Ultraschallsensor (18), einem Radar (14), einen Lidar (16), einer Kamera (20), einer Trägheitsmesseinheit (24), einem Odometer (22), einer globalen Satellitenpositionierungsvorrichtung (12) gewählt ist.

5. Regler (26) nach einem der Ansprüche 2 bis 4, bei dem das Bestimmungsmodul (38) mindestens eine Erkennungseinheit umfasst, die unter einer Einheit zur Erkennung eines anderen Fahrzeugs (42), einer Einheit zur Erkennung eines Fußgängers (44), einer Einheit zur Erkennung einer Straßeninfrastruktur (48), einer Einheit zur Erkennung einer Fahrbahngeometrie (46) und einer Einheit zur Erkennung von Wetterverhältnissen (50) gewählt ist.

6. Regler (26) nach einem der Ansprüche 2 bis 5, bei dem das Bestimmungsmodul (38) geeignet ist, mindestens ein Autobahn- oder Schnellstraßenschild zu erkennen, das unter einem Autobahnabschnittsanfangsschild (52), einem Nummernschild einer Hauptstraße des Netzes (54) und einem Nummernschild einer Nebenstraße des Netzes (56) gewählt ist, und dazu ausgestaltet ist zu bestimmen, dass das Umfeld ein Straßenumfeld ist, wenn ein Autobahn- oder Schnellstraßenschild erkannt wird.

7. Regler (26) nach einem der Ansprüche 2 bis 6, bei dem das Bestimmungsmodul (38) geeignet ist, mindestens ein städtisches Schild zu erkennen, das unter einer Ortseingangstafel (58), einem Ankündigungsschild für kreuzende Fahrradfahrer (60) und einem Ankündigungsschild für einen Fußgängerüberweg (62) gewählt ist, und dazu ausgestaltet ist zu bestimmen, dass das Umfeld städtisch ist, wenn ein städtisches Schild erkannt wird.

8. Regler (26) nach einem der Ansprüche 2 bis 7, bei dem das Bestimmungsmodul (38) geeignet ist, mindestens ein Gefahrenschild zu erkennen, das unter einem Hinweisschild auf einen Kreisverkehr (66), einem Stoppschild (66) und einem Hinweisschild auf eine Ampel (70) gewählt ist, und dazu ausgestaltet ist zu bestimmen, dass das Umfeld gefährlich ist, wenn ein Gefahrenschild erkannt wird.

9. Regler (26) nach einem der Ansprüche 6 bis 8, bei dem das Ermittlungsmodul (36) einen Grenzwert (LIM) zwischen 25 Sekunden und 35 Sekunden im Fall eines Straßenumfelds, einen Grenzwert (LIM) zwischen 2 Sekunden und 4 Sekunden im Fall eines städtischen Umfelds und einen Grenzwert (LIM) unter 0,1 Sekunden im Fall eines gefährlichen Umfelds wählt.

10. Verfahren zur adaptiven Geschwindigkeitsregelung für ein Kraftfahrzeug, bei dem man ein vorausfahrendes Fahrzeug detektiert (E03, E06, E09), einen Sollwert (E01, E04) erarbeitet, vor einem Stoppzeitpunkt des Fahrzeugs einen dem Sollwert entsprechenden Wert speichert (E07), einen Zeitmesser (34) zu einem Stoppzeitpunkt des Fahrzeugs initialisiert und betätigt, ein Umfeld des Fahrzeugs bestimmt (E10), einen Grenzwert (LIM) in Abhängigkeit vom Umfeld des Fahrzeugs bestimmt und den gespeicherten Wert zurücksetzt (E12), wenn der Zeitmesser (34) eine Dauer (t) ausgibt, die größer als der Grenzwert (LIM) ist.

## Claims

1. Adaptive cruise controller (26) for a motor vehicle (2), comprising a detection module (28) for detecting a lead vehicle, a formulation module (30) able to formulate a setpoint, a storage module (32) configured to store a value corresponding to the setpoint, a chronometer (34) configured to be initialized and actuated at an instant of stopping of the vehicle, and a reinitialization module (72) for reinitializing the storage module (32), **characterized in that** it comprises an establishment module (36) able to determine a limit (LIM) as a function of an environment of the vehicle (2), the reinitialization module (72) being configured to reinitialize the value stored by the storage module (32) if the chronometer (34) delivers a duration (t) greater than the limit (LIM).

2. Controller (26) according to Claim 1, in which the formulation module (30) is able to formulate at least one setpoint chosen from among a speed control activation setpoint (CONS_1), a control speed setpoint (CONS_2), an activation setpoint (CONS_3) of a distance control with respect to a lead vehicle, and a control distance setpoint (CONS_4).

3. Controller (26) according to Claim 2, in which the establishment module (30) comprises a determination module (38) able to determine an environment of the vehicle (2), and a map (40) containing values of limits (LIM) as a function of an environment.

4. Controller (26) according to Claim 2 or 3, in which the determination module (38) comprises at least one means chosen from among an ultrasound sensor (18), a radar (14), a lidar (16), a camera (20), an inertial measurement unit (24), an odometer (22), a satellite-based worldwide positioning device (12).

5. Controller (26) according to any one of Claims 2 to 4, in which the determination module (38) comprises at least one identification unit chosen from among an identification unit in respect of another vehicle (42), a pedestrian identification unit (44), a road infrastructure identification unit (48), a road geometry identification unit (46) and a meteorological conditions identification unit (50).

6. Controller (26) according to any one of Claims 2 to 5, in which the determination module (38) is able to identify at least one motorway or expressway symbol chosen from among a motorway section commencement sign (52), a main network route panel (54) and a secondary network route panel (56), and configured to determine that the environment is a road environment if a motorway or expressway symbol is identified.

7. Controller (26) according to any one of Claims 2 to 6, in which the determination module (38) is able to identify at least one urban symbol chosen from among a built-up area entry sign (58), a cycleway announcement sign (60) and a pedestrian crossing announcement sign (62), and configured to determine that the environment is an urban environment if an urban symbol is identified.

8. Controller (26) according to any one of Claims 2 to 7, in which the determination module (38) is able to identify at least one danger symbol chosen from among a roundabout indication sign (66), a stop sign (68) and a traffic light announcement sign (70), and configured to determine that the environment is a dangerous environment if a danger symbol is identified.

9. Controller (26) according to any one of Claims 6 to 8, in which the establishment module (36) chooses a limit (LIM) lying between 25 seconds and 35 seconds in the case of a road environment, a limit (LIM) lying between 2 seconds and 4 seconds in the case of an urban environment, and a limit (LIM) of less than 0.1 second in the case of a dangerous environment.

10. Method of adaptive cruise control of a motor vehicle, in which a lead vehicle is detected (E03, E06, E09), a setpoint (E01, E04) is formulated, a value corresponding to the setpoint is stored (E07) before an instant of stopping of the vehicle, a chronometer (34) is initialized and actuated at an instant of stopping of the vehicle, an environment of the vehicle is determined (E10), a limit (LIM) is determined as a function of the environment of the vehicle, and the stored value is reinitialized (E12) if the chronometer (34) delivers a duration (t) greater than the limit (LIM).
